# EUROPEAN PATENT APPLICATION

(11) **EP 4 431 788 A1**
(43) Date of publication of application: **18.09.2024**
(21) Application number: 23768105.1
(22) Date of filing: 18.04.2023
(51) Int. Cl.: F17C 1/00, H01M 10/04, H01M 6/00, F17C 13/04

(54) **PRESSURE CONTAINER DEVICE AND BATTERY MANUFACTURING SYSTEM**

(30) Priority: 28.01.2023 CN 202320082941 U
(71) Applicant: Contemporary Amperex Technology Co., Limited, Ningde, Fujian 352100 (CN)
(72) Inventor: CHEN, Rongqiang, Ningde, Fujian 352100 (CN); TAN, Xinyong, Ningde, Fujian 352100 (CN); WU, Zhaoyang, Ningde, Fujian 352100 (CN)
(74) Representative: Ran, Handong
(86) International application number: PCT/CN2023/088982
(87) International publication number: WO 2024/156153

(57) **Abstract**

This application relates to a pressure vessel apparatus and a battery manufacturing system. A control valve is connected between at least two cavities. When a standing operation under pressure has been completed in one of the cavities, the control valve controls internal communication between the two cavities, such that an internal pressure in the cavity in which the standing operation under pressure has been completed can be released to the other cavity, thereby implementing transfer of some of compressed air between the cavities. In this case, the cavity receiving the released pressure can maintain a pressure required for operation without being replenished with a large amount of air, such that some air is cyclically utilized, and energy is saved. In this way, the pressure vessel apparatus in this application effectively reduces energy consumption of operation while meeting the pressure required for operation.

## Description

### CROSS-REFERENCE TO RELATED APPLICATIONS

This application claims priority to Chinese Patent Application No. 2023200829419 filed on January 28, 2023 and entitled "PRESSURE VESSEL APPARATUS AND BATTERY MANUFACTURING SYSTEM", which is incorporated herein by reference in its entirety.

### TECHNICAL FIELD

This application relates to the field of battery technologies, and in particular, to a pressure vessel apparatus and a battery manufacturing system.

### BACKGROUND

In a manufacturing process of a battery, the battery needs to be placed in a pressure vessel for a standing operation under pressure. For example, an electrolyte-injected battery needs to be placed in a pressure vessel for a standing operation under pressure. However, due to the structural design defects of traditional pressure vessels, a large amount of gas needs to be replenished during each standing operation under pressure to maintain the pressure required for operation, resulting in high energy consumption of operation.

### SUMMARY

This application is intended to resolve at least one of the technical problems in the prior art. In view of this, it is necessary to provide a pressure vessel apparatus and a battery manufacturing system to reduce energy consumption of operation while meeting the pressure required for operation.

According to a first aspect, this application provides a pressure vessel apparatus including: a plurality of cavities, each cavity being configured to hold a workpiece inside; and a control valve connected between at least two of the cavities to control internal communication and non-communication between the cavities connected to the control valve.

In the pressure vessel apparatus, the control valve is connected between the at least two cavities; and when a standing operation under pressure has been completed in one of the cavities, the two cavities are controlled to maintain internal communication via the control valve, such that an internal pressure in the cavity in which the standing operation under pressure has been completed can be released to the other cavity, thereby implementing transfer of some of compressed air between the cavities. In this case, the cavity receiving the released pressure can maintain a pressure required for operation without being replenished with a large amount of air, such that some air is cyclically utilized, and energy is saved. In this way, the pressure vessel apparatus in this application effectively reduces energy consumption of operation while meeting the pressure required for operation.

In some embodiments, the pressure vessel apparatus further includes a pressurization valve, at least one of the cavities communicates with the pressurization valve, and the pressurization valve is configured to communicate with an air source. In this way, with use of the pressurization valve, a pressurization operation for the cavity can be effectively controlled, helping to improve operation convenience of the pressure vessel apparatus.

In some embodiments, the pressure vessel apparatus further includes a pressure relief valve, at least one of the cavities communicates with the pressure relief valve, and the pressure relief valve is configured to communicate with the outside. In this way, with use of the pressure relief valve, the residual air pressure in the cavity can be released outside, such that the cavity can be opened safely, improving the safety of operation.

In some embodiments, the pressure vessel apparatus further includes an end cover mechanism, at least one end of each of the cavities in a preset direction is provided with an opening, and the end cover mechanism is configured to control the opening to open or close. In this way, with use of the end cover mechanism, the opening is convenient to open and close, such that pressurization and material replacement operations can be conveniently implemented in the cavity, improving the operation convenience.

In some embodiments, the pressure vessel apparatus further includes a conveying mechanism, the conveying mechanism being at least partially located in at least one of the cavities and configured to drive the workpiece to be fed or discharged via the opening. In this way, with the conveying mechanism provided in the cavity, the workpiece is convenient to be fed or discharged via the opening, helping to improve material replacement operation of the pressure vessel apparatus. In addition, with use of the conveying mechanism, different workpieces are conveyed to different stop positions in the cavity, improving internal utilization of the cavity.

In some embodiments, the conveying mechanism is provided with a limiting part, the limiting part being configured to limit the workpiece in the preset direction. In this way, with use of the limiting part, the workpiece is limited in the preset direction, the possibility of relative slippage of the workpiece during conveying is reduced, and conveying stability of the workpiece is improved.

In some embodiments, the conveying mechanism includes a first driver, a driving member, a driven member, and a conveying member, where the driving member and the driven member are spaced apart along the preset direction; the conveying member loops around the driving member and the driven member; and the first driver is configured to drive the driving member to rotate. In this way, with cooperation of the driving member, the driven member, and the conveying member, the workpiece is transferred stably. Such manner reduces the amount of parts, reduces the manufacturing cost of devices, improves reliability of devices, and reduces the maintenance cost of devices in comparison with a conventional workpiece transfer manner.

In some embodiments, the end cover mechanism includes: an end cover; a second driver in driving connection with the end cover and configured to drive the end cover to close the opening or move away from the opening; and a locking structure, where when the end cover closes the opening, the locking structure is configured to lock or unlock the end cover and the cavity. In this way, the end cover automatically opens and closes by virtue of the second driver, and the end cover is locked and unlocked by virtue of the locking structure, facilitating automatic control of the pressure vessel apparatus.

In some embodiments, the locking structure includes a third driver, a lock ring, a first protrusion provided on an inner wall of the lock ring, and a second protrusion provided on the end cover, where the lock ring sleeves the periphery of the opening; when the end cover closes the opening, the second protrusion is located on one side of the first protrusion facing toward the cavity; and the third driver is configured to drive the lock ring or the end cover to rotate about an axis thereof, so that the first protrusion and the second protrusion are misaligned or face toward each other in the preset direction. In this way, due to the positional relationship that the first protrusion and the second protrusion are misaligned or face toward each other in the preset direction, the end cover can be quickly switched between locking and unlocking, helping to improve operation efficiency.

In some embodiments, the pressure vessel apparatus further includes a material delivery mechanism; one side of each opening is correspondingly provided with the material delivery mechanism; and the material delivery mechanism is configured to deliver a to-be-processed workpiece to the opening or deliver a processed workpiece out of the opening. In this way, use of the material delivery mechanism allows more convenient material feeding and discharging in the cavity and improves the operation efficiency.

In some embodiments, the material delivery mechanism includes a base and a transfer holder, where one end of the base extends to the opening; and the transfer holder is slidably disposed on the base and is configured to carry the workpiece. In this way, with cooperation of the transfer holder and the base, the workpiece is transferred more conveniently, improving material feeding and discharging efficiency in the cavity.

In some embodiments, all of the cavities are spaced apart side by side, and two opposite ends of each of the cavities in the preset direction are both provided with the opening, where the preset direction is the horizontal direction. Such a proper position arrangement of the cavity and the opening allows synchronous implementation of material feeding and discharging in the cavity and improves the operation efficiency. In addition, space is saved, and use in space-limited situations is facilitated.

According to a second aspect, this application provides a pressure vessel apparatus including: a cavity provided with an opening at both opposite ends in a preset direction and configured to hold a workpiece inside; an end cover mechanism configured to control the opening to open or close; and a conveying mechanism at least partially located in the cavity and configured to drive the workpiece to be fed via one opening and discharged via the other opening.

In the pressure vessel apparatus, the conveying mechanism is provided in the cavity, and the conveying mechanism can feed a to-be-processed workpiece via one opening and discharge a processed workpiece via the other opening, such that material feeding and discharging in the cavity can be synchronously implemented, helping to improve efficiency of standing operation under pressure. In addition, the workpiece fed can be transferred in the cavity under the action of the conveying mechanism, such that different workpieces can be orderly distributed to different positions in the cavity, making full use of the internal space of the cavity and improving utilization of the cavity. In this way, with the conveying mechanism provided in the cavity in this application, the production tempo of batteries can be effectively met.

According to a third application, this application provides a battery manufacturing system including the foregoing pressure vessel apparatus.

The foregoing description is merely an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or conventional technologies. Apparently, the accompanying drawings in the following description show merely the embodiments of this application, and persons of ordinary skill in the art may still derive other drawings from the disclosed accompanying drawings without creative efforts.
FIG. 1 is a first schematic structural diagram of a pressure vessel apparatus according to some embodiments of this application;
FIG. 2 is a schematic diagram of an internal structure of a cavity according to some embodiments of this application;
FIG. 3 is an enlarged schematic diagram of a structure of circle C in FIG. 2;
FIG. 4 is a second schematic structural diagram of a pressure vessel apparatus according to some embodiments of this application;
FIG. 5 is an enlarged schematic diagram of a structure of circle B in FIG. 4; and
FIG. 6 is an enlarged schematic diagram of a structure of circle A in FIG. 1.

100. pressure vessel apparatus; 10. cavity; 1a. first cavity; 1b. second cavity; 11. opening; 12. control valve; 121. first pipe piece; 13. pressurization valve; 14. pressure relief valve; 141. second pipe piece; 15. stop position; 20. end cover mechanism; 21. end cover; 211. rotating shaft; 22. second driver; 23. locking structure; 231. lock ring; 232. third driver; 233. first protrusion; 234. second protrusion; 235. locking gap; 30. conveying mechanism; 31. first driver; 32. driving member; 33. driven member; 34. conveying member; 341. chain; 35. limiting part; 40. material delivery mechanism; 41. base; 42. transfer holder; 421. roller shaft; 200. workpiece; 210. tray; and X. preset direction.

### DESCRIPTION OF EMBODIMENTS

The following clearly and completely describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application without creative efforts shall fall within the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise" and any other variations thereof in the specification, claims and brief description of the drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is merely for describing an associative relationship of associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms such as "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of market development, application of traction batteries is becoming more and more extensive. Traction batteries have been widely used in not only energy storage power supply systems such as hydroelectric power plants, thermal power plants, wind power plants, and solar power plants, but also other fields including electric transportation tools such as electric bicycles, electric motorcycles and electric vehicles, military equipment, and aerospace. With continuous expansion of application fields of traction batteries, market demands for the traction batteries are also expanding.

The inventor has noted that a battery needs a standing operation in an environment with a specified pressure during manufacturing. For example, after an electrolyte is injected into the battery, the battery has a high internal pressure. Therefore, in the standing process, an external environment also needs to be controlled to have a specified pressure, such that the internal pressure and external pressure reach or get close to a balance, thereby avoiding deformation or breakage, caused by pressure difference, of part of the structure, for example, an explosion-proof membrane on the battery.

After a standing operation under pressure is completed, a traditional pressure vessel apparatus needs to release the pressure to the outside. A cover is opened after an internal pressure of the pressure vessel decreases to a specified value, the battery is replaced with a new battery, and the cover is closed. After the cover is closed, the pressure vessel needs to be replenished with a large amount of air with the same volume to maintain the pressure required for operation. However, in each material replacement, a traditional pressure vessel apparatus needs to release the pressure to the outside and be replenished with a large amount of air with the same volume, resulting in serious waste of energy and increasing energy consumption of operation.

In view of this, to reduce the energy consumption of operation while meeting the pressure required for operation, the inventor has designed a pressure vessel apparatus through in-depth research. A control valve is connected between at least two cavities, and the control valve is configured to control communication and non-communication between two of the cavities.

When a standing operation under pressure has been completed in one of the cavities, the two cavities are controlled to maintain internal communication via the control valve, such that an internal pressure in the cavity in which the standing operation under pressure has been completed can be released to the other cavity, thereby implementing transfer of some of compressed air between the cavities. In this case, the cavity receiving the released pressure can maintain a pressure required for operation without being replenished with a large amount of air, such that some air is cyclically utilized, and energy is saved. In this way, the pressure vessel apparatus in this application effectively reduces energy consumption of operation while meeting the pressure required for operation.

It is appreciated that, the pressure vessel apparatus provided in this application is applicable to not only a battery manufacturing process but also other processes requiring standing under pressure.

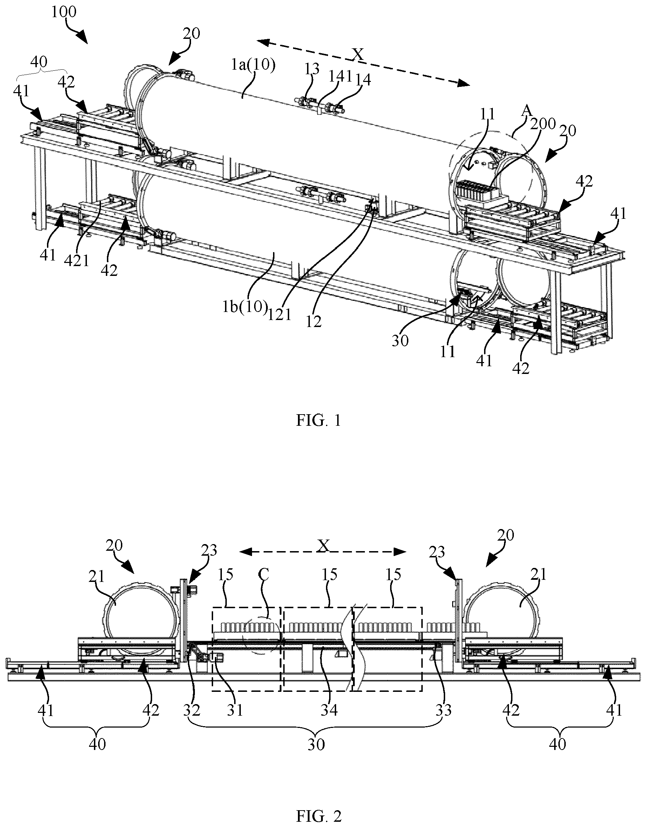

According to some embodiments of this application, referring to FIG. 1, this application provides a pressure vessel apparatus 100. The pressure vessel apparatus 100 includes a plurality of cavities 10 and a control valve 12. Each of the cavities 10 is configured to hold a workpiece 200 inside. The control valve 12 is connected between at least two of the cavities 10 to control internal communication and non-communication between the cavities 10 connected to the control valve 12.

The cavity 10 refers to a vessel structure with some internal space for holding the workpiece 200 inside. Since the workpiece 200 requires a standing operation under pressure in the cavity 10, the cavity 10 should be designed with sufficient air tightness and pressure resistance. In a case that the pressure vessel apparatus 100 is used in a standing process under pressure for an electrolyte-injected battery, the workpiece 200 is the electrolyte-injected battery. It should be noted that the battery mentioned herein may also be understood as an electrolyte-injected battery cell.

The cavities 10 may be spaced apart from each other or connected tightly. In addition, there may be various designs for an arrangement manner of the cavities 10. For example, the cavities 10 are arranged side by side; or the cavities 10 are staggered.

The control valve 12 refers to a valve device capable of controlling mutual communication of internal air in the at least two of the cavities 10 connected to the control valve 12. For example, the control valve 12 may be but is not limited to a ball valve, a butterfly valve, and a stop valve. In a case that the control valve 12 is connected among three or more cavities 10, there are various designs for a connection manner of the control valve 12. For example, one control valve 12 is connected between any two of the cavities 10, such that air transfer can be implemented between the any two cavities 10. Alternatively, all of the cavities 10 are grouped, where each group includes two cavities 10, and the control valve 12 is connected between the cavities 10 in the same group, such that air transfer is implemented between the cavities 10 in the same group. It is appreciated that, the control valve 12 may alternatively be designed as a multi-way valve device such as a three-way valve or a four-way valve, and the plurality of cavities 10 are connected through one control valve 12.

To facilitate the connection between the control valve 12 and the cavities 10, a first pipe piece 121 may be used to connect the control valve 12 to the at least two of the cavities 10, respectively.

When a standing operation under pressure has been completed in one of the cavities 10, the two cavities 10 are controlled to maintain internal communication via the control valve 12, such that an internal pressure in the cavity 10 in which the standing operation under pressure has been completed can be released to the other cavity 10, thereby implementing transfer of some of compressed air between the cavities 10. In this case, the cavity 10 receiving the released pressure can maintain a pressure required for operation without being replenished with a large amount of air, such that some air is cyclically utilized, and energy is saved. In this way, the pressure vessel apparatus 100 in this application effectively reduces energy consumption of operation while meeting the pressure required for operation.

According to some embodiments of this application, referring to FIG. 1, the pressure vessel apparatus 100 further includes a pressurization valve 13. At least one cavity 10 communicates with the pressurization valve 13, and the pressurization valve 13 is configured to communicate with an air source.

The pressurization valve 13 refers to a device for controlling air to be fed into the cavity 10. For example, the pressurization valve 13 may be but is not limited to a ball valve, a butterfly valve, and a stop valve. During a standing operation under pressure, the internal air pressure of the cavity 10 receiving the released pressure cannot reach the pressure required for operation. Therefore, the air in the air source can be fed into the cavity 10 by opening the pressurization valve 13 to replenish with air to top up. It is appreciated that, during the operation, the pressurization valve 13 may also be opened periodically to make up for the air pressure lost due to insufficient air tightness in the standing process.

In all of the cavities 10, some of the cavities 10 may be provided with the pressurization valve 13, and the other cavities 10 are provided with no pressurization valve 13. The cavity 10 provided with no pressurization valve can directly communicate with the air source. For example, the air source can be opened to fill the cavity 10 with air, and the air source can be closed to stop filling the cavity 10 with air. It is appreciated that, the cavities 10 each may be provided with the pressurization valve 13. The air source may be but is not limited to devices such as an air compressor and an air compression tank.

With use of the pressurization valve 13, a pressurization operation for the cavity 10 can be effectively controlled, helping to improve operation convenience of the pressure vessel apparatus 100.

According to some embodiments of this application, referring to FIG. 1, the pressure vessel apparatus 100 further includes a pressure relief valve 14. At least one cavity 10 communicates with the pressure relief valve 14, and the pressure relief valve 14 is configured to communicate with the outside.

The pressure relief valve 14 refers to a device for controlling air in the cavity 10 to be discharged. For example, the pressure relief valve 14 may be but is not limited to a ball valve, a butterfly valve, and a stop valve. After the cavity 10 releases the pressure into another cavity 10, some residual air pressure is present in the cavity 10. In this case, the cavity 10 can release the pressure to the outside via the pressure relief valve 14, such that the cavity 10 can be opened safely.

The pressure relief valve 14 may be provided on some of the cavities 10, or provided on all of the cavities 10, that is, each of the cavities 10 is provided with the pressure relief valve 14. In some specific embodiments, the cavity 10 is provided with both the pressurization valve 13 and the pressure relief valve 14, where the pressurization valve 13 and the pressure relief valve 14 both communicate with the cavity 10 via a second pipe piece 141.

With use of the pressure relief valve 14, the residual air pressure in the cavity 10 can be released outside, such that the cavity 10 can be opened safely, improving the safety of operation.

According to some embodiments of this application, referring to FIG. 1, the pressure vessel apparatus 100 further includes an end cover mechanism 20. At least one end of each of the cavities 10 in a preset direction X is provided with an opening 11, and the end cover mechanism 20 is configured to control the opening 11 to open or close.

The end cover mechanism 20 refers to a component capable of closing or opening the opening 11. When the end cover mechanism 20 closes the opening 11, the inside of the cavity 10 is in a closed state. In this case, the cavity 10 can be internally pressurized, such that a standing operation under pressure can be performed on the workpiece 200. The opening 11 being opened by the end cover mechanism 20 helps to completely release the internal air pressure of the cavity 10 and also facilitates discharging or feeding of the workpiece 200 via the opening 11.

The opening 11 may be provided in one end of the cavity 10, and may alternatively be provided in two opposite ends of the cavity 10. When the two opposite ends of the cavity 10 are both provided with the opening 11, the two openings 11 each need to be provided with one end cover mechanism 20, such that opening and closing of each opening 11 can be effectively controlled. For example, after a standing operation under pressure is completed, the two end cover mechanisms 20 can be opened, such that the two openings 11 of the cavity 10 are both opened. In this case, a processed workpiece 200 can be discharged via one opening 11; a to-be-processed workpiece 200 is fed via the other opening 11; and after feeding and discharging are completed, the two openings 11 can be closed by the end cover mechanisms 20, respectively, such that the inside of the cavity 10 is kept in a closed state.

With use of the end cover mechanism 20, the opening 11 is convenient to open and close, such that pressurization and material replacement operations can be conveniently implemented in the cavity 10, improving the operation convenience.

According to some embodiments of this application, referring to FIG. 2, the pressure vessel apparatus 100 further includes a conveying mechanism 30. The conveying mechanism 30 is at least partially located in at least one cavity 10 and configured to drive the workpiece 200 to be fed or discharged via the opening 11.

The conveying mechanism 30 refers to a component capable of conveying and transferring the workpiece 200. When the conveying mechanism 30 is at least partially located in the cavity 10, the conveying mechanism 30 can convey a to-be-processed workpiece 200 into the cavity 10 via the opening 11 or convey a processed workpiece 200 out of the opening 11. The conveying mechanism 30 being at least partially located in the cavity 10 should be understood as that at least a conveying portion of the conveying mechanism 30 is located in the cavity 10, and the conveying portion is a portion of the conveying mechanism 30 that directly carries and conveys the workpiece 200, for example, a conveying belt, a conveying chain, or a conveying roller. It is appreciated that, in some embodiments, each of the cavities 10 is provided with the conveying mechanism 30 inside.

Since the conveying mechanism 30 is at least partially located in the cavity 10, the conveying mechanism 30 is also capable of conveying the workpiece 200 in the cavity 10. For example, the cavity 10 is provided with a plurality of stop positions 15 in the preset direction X. After the conveying mechanism 30 has conveyed to-be-processed workpieces 200 in sequence via the opening 11, the workpieces 200 can still be conveyed by the conveying mechanism 30, such that the workpieces 200 stop at different stop positions 15, respectively. The conveying mechanism 30 may be one complete conveying line in the cavity 10, or may be formed by splicing a plurality of conveying lines, or the like.

When the two opposite ends of the cavity 10 in the preset direction X are both provided with the opening 11, the conveying mechanism 30 may feed a to-be-processed workpiece 200 via one opening 11 and discharge a processed workpiece 200 via the other opening 11. The conveying mechanism 30 may extend along the preset direction X in the cavity 10.

The conveying mechanism 30 may have various structural designs. For example, the conveying mechanism 30 may be designed as a belt conveying device, a chain conveying device, a roller conveying device, or the like.

With the conveying mechanism 30 provided in the cavity 10, the workpiece 200 can be conveniently fed or discharged via the opening 11, helping to improve material replacement operation of the pressure vessel apparatus 100. In addition, with use of the conveying mechanism 30, different workpieces 200 can be conveyed to different stop positions 15 in the cavity 10, improving internal utilization of the cavity 10.

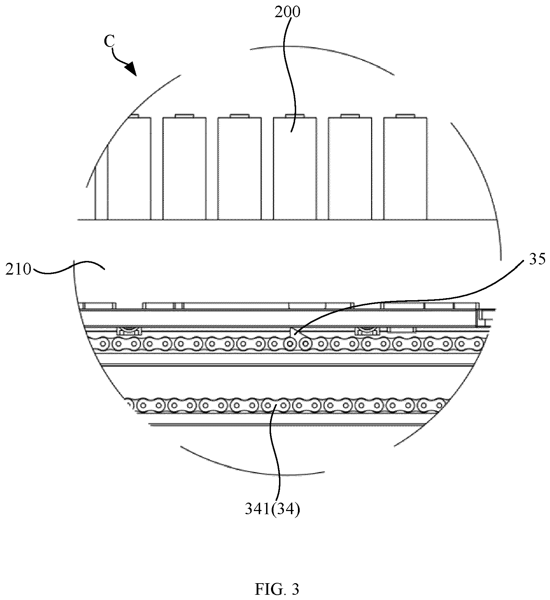

According to some embodiments of this application, referring to FIG. 3, the conveying mechanism 30 is provided with a limiting part 35, the limiting part 35 being configured to limit the workpiece 200 in the preset direction X.

The limiting part 35 refers to a component capable of limiting movement of the workpiece 200 in the preset direction X, and the limiting part 35 and the conveying mechanism 30 may be an integrated structure or a combined structure. The integrated structure can be construed as that the limiting part 35 is formed on the conveying mechanism 30 in an integral formation such as extrusion, die-casting, and injection molding. The combined structure can be construed as that the limiting part 35 and the conveying mechanism 30 are installed and combined to form an integral structure through bolting, clamping, adhesion, welding, pinning, and the like.

There may be one or more limiting parts 35. When there are a plurality of limiting parts 35, the plurality of limiting parts 35 are spaced apart along the preset direction X on the conveying mechanism 30. In this way, during conveyance of the workpieces 200, the limiting parts 35 can correspondingly limit different workpieces 200. In addition, the limiting part 35 also has various structural designs. For example, the limiting part 35 may be designed as a structure protruding from the conveying mechanism 30 or the like.

With use of the limiting part 35, the workpiece 200 is limited in the preset direction X, the possibility of relative slippage of the workpiece 200 during conveyance is reduced, and conveying stability of the workpiece 200 is improved.

According to some embodiments of this application, referring to FIG. 3, the conveying mechanism 30 includes a first driver 31, a driving member 32, a driven member 33, and a conveying member 34, where the driving member 32 and the driven member 33 are spaced apart along the preset direction X; the conveying member 34 loops around the driving member 32 and the driven member 33; and the first driver 31 is configured to drive the driving member 32 to rotate.

The first driver 31 refers to a component for providing conveying force for the conveying mechanism 30. For example, the first driver 31 may be a motor or the like. The driving member 32 and the driven member 33 respectively refer to structures capable of rotating about their respective axes. For example, the driving member 32 and the driven member 33 can both be designed as a roller shaft 421 structure, a roller structure, or the like.

The conveying member 34 refers to a component that fits between the driving member 32 and the driven member 33 and that is capable of carrying and conveying the workpiece 200, for example, a chain 341, a belt, or another structure. In some specific embodiments, the conveying member 34 is a chain 341. In addition, to reduce slippage of the workpiece 200 during conveyance, the conveying member 34 may be provided with a limiting part 35. For example, the chain 341 is provided with a protrusion structure for limiting relative slippage of the workpiece 200 in the preset direction X.

With cooperation of the driving member 32, the driven member 33, and the conveying member 34, the workpiece 200 is transferred stably. Such manner reduces the amount of parts, reduces the manufacturing cost of devices, improves reliability of devices, and reduces the maintenance cost of devices in comparison with a conventional workpiece 200 transfer manner.

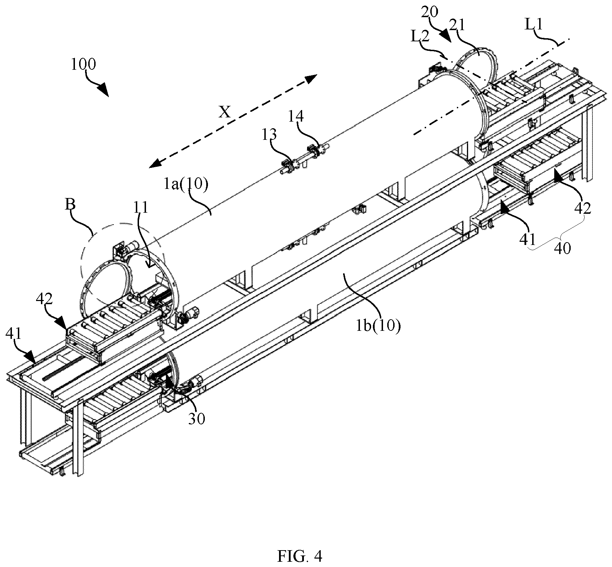

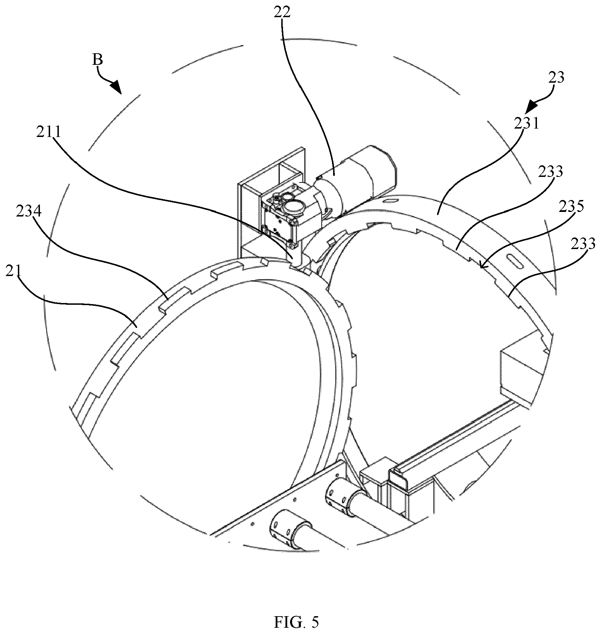

According to some embodiments of this application, referring to FIG. 4 and FIG. 5, the end cover mechanism 20 includes an end cover 21, a second driver 22, and a locking structure 23. The second driver 22 is in driving connection with the end cover 21 and configured to drive the end cover 21 to close the opening 11 or move away from the opening 11. When the end cover 21 closes the opening 11, the locking structure 23 is configured to lock or unlock the end cover 21 and the cavity 10.

The end cover 21 refers to a structure that can cover the opening 11 to close the cavity 10, and the shape of the end cover 21 can be determined according to the shape of the opening 11. For example, the end cover 21 may be designed to be circular, square, elliptic, or the like. To enhance air tightness between the end cover 21 and the cavity 10, a sealing structure may be provided between the end cover 21 and a fitting surface of the cavity 10, for example, a rubber ring.

In addition, to accurately identify whether the end cover 21 is opened or closed in place, an opening sensor and a closing sensor may be provided respectively. The opening sensor is configured to check whether the end cover 21 is opened in place, and the closing sensor is configured to check whether the end cover 21 is closed in place. The opening sensor and the closing sensor may both be contact sensors, or non-contact sensors, for example, photoelectric sensors.

The second driver 22 refers to a component capable of providing force for the end cover 21 to close or open the opening 11. The second driver 22 may be a motor, or may be a device with a telescopic function, for example, a pneumatic cylinder, an electric cylinder, or a hydraulic cylinder. The second driver 22 drives the end cover 21 to open or close in various manners. For example, under the action of the second driver 22, the end cover 21 closes the opening 11 through rotation. Alternatively, the end cover 21 closes the opening 11 through translation or a combination of translation and rotation. In some specific embodiments, the end cover 21 is connected to one end of the cavity 10 via a rotating shaft 211, and the second driver 22 drives the end cover 21 to rotate so as to close the opening 11 or move away from the opening 11.

The locking structure 23 refers to a component for stably locking the end cover 21 at the opening 11 so as to prevent the end cover 21 from being forced open during pressurization. The locking structure 23 locks the end cover 21 in various manners. For example, the locking structure 23 may lock the end cover 21 on the cavity 10 through but not limited to buckling, pinning, electromagnetic suction, or the like.

During a standing operation under pressure, when the end cover 21 covers the opening 11, the locking structure 23 locks the end cover 21; and when the pressure in the cavity 10 is released to a safe pressure, unlocking may be performed to open the end cover 21.

The end cover 21 automatically opens and closes by virtue of the second driver 22, and the end cover 21 is locked and unlocked by virtue of the locking structure 23, facilitating automatic control of the pressure vessel apparatus 100.

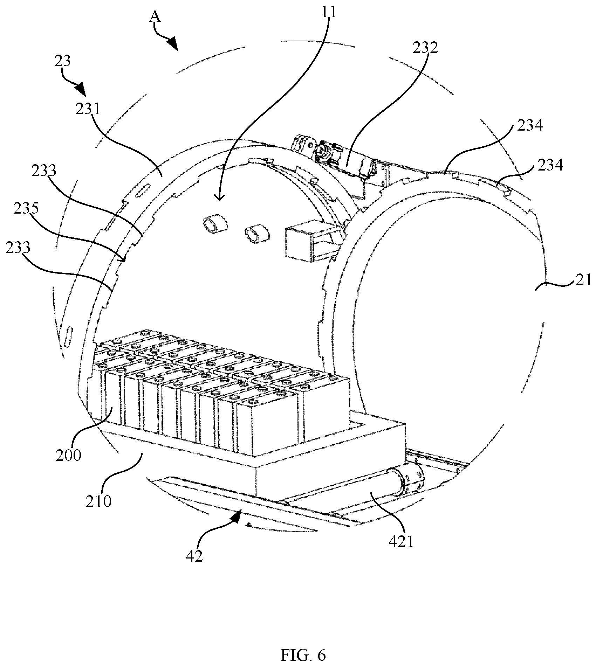

According to some embodiments of this application, referring to FIG. 6, the locking structure 23 includes a third driver 232, a lock ring 231, a first protrusion 233 provided on an inner wall of the lock ring 231, and a second protrusion 234 provided on the end cover 21. The lock ring 231 sleeves the periphery of the opening 11. When the end cover 21 closes the opening 11, the second protrusion 234 is located on one side of the first protrusion 233 facing toward the cavity 10, and the third driver 232 is configured to drive the lock ring 231 or the end cover 21 to rotate about an axis thereof, such that the first protrusion 233 and the second protrusion 234 are misaligned or face toward each other in the preset direction X.

The third driver 232 refers to a component capable of driving the lock ring 231 and the end cover 21 to rotate relative to each other. The third driver 232 may be a motor, or may be a device with a telescopic function, for example, a pneumatic cylinder, an electric cylinder, or a hydraulic cylinder. When the end cover 21 closes the opening 11, the second protrusion 234 is located on one side of the first protrusion 233 facing toward the cavity 10, to achieve the purpose of enabling the second protrusion 234 to abut against the side of the first protrusion 233 facing toward the cavity 10. In this way, after the cavity 10 is pressurized, the air pressure pushes the end cover 21, and the end cover 21 accordingly abuts against the first protrusion 233 through the second protrusion 234, thereby implementing a locking function.

After the lock ring 231 or the end cover 21 rotates, the first protrusion 233 and the second protrusion 234 may switch between a misaligned state and a face-toward-each-other state. When first protrusion 233 and the second protrusion 234 are misaligned in the preset direction X, the first protrusion 233 does not abut against the second protrusion 234. In this case, the end cover 21 is in an unlocked state and can be successfully opened from the cavity 10. When the first protrusion 233 and the second protrusion 234 face toward each other in the preset direction X, the end cover 21 tends to be opened outward under the action of the air pressure in the cavity 10, and in this case, the first protrusion 233 abuts against the second protrusion 234 to prevent the end cover 21 from being opened. It should be noted that the lock ring 231 is not necessary to fixedly sleeve the cavity 10, and in some embodiments, a connection manner in which the third driver 232 drives the lock ring 231 to rotate about an axis thereof is allowed. For example, the lock ring 231 can movably sleeve the cavity 10 via a structure such as an annular guide rail. For ease of understanding of the respective axes of the lock ring 231 and the end cover 21, FIG. 4 is used as an example for description. The axis of the lock ring 231 is a dotted-dashed line L1 in FIG. 4, and the axis of the end cover 21 is a dotted-dashed line L2 in FIG. 4.

There may be one or more first protrusions 233 or second protrusions 234. When there are a plurality of first protrusions 233, all of the first protrusions 233 are spaced apart along a circumferential direction of the lock ring 231. A locking gap 235 between adjacent two of the first protrusions 233 allows the second protrusion 234 to pass through, such that the second protrusion 234 can be located on one side of the first protrusion 233 facing toward the cavity 10.

In addition, to accurately control the locking state of the end cover 21, a locking sensor and an unlocking sensor are provided respectively. The locking sensor is configured to check whether the locking structure 23 implements in-place locking, and the unlocking sensor is configured to check whether the locking structure 23 implements in-place unlocking.

Due to the positional relationship that the first protrusion 233 and the second protrusion 234 are misaligned and face toward each other in the preset direction X, the end cover 21 can be quickly switched between locking and unlocking, helping to improve operation efficiency.

According to some embodiments of this application, referring to FIG. 1, the pressure vessel apparatus 100 further includes a material delivery mechanism 40. One side of each opening 11 is correspondingly provided with the material delivery mechanism 40; and the material delivery mechanism 40 is configured to deliver a to-be-processed workpiece 200 to the opening 11 or deliver a processed workpiece 200 out of the opening 11.

The material delivery mechanism 40 refers to a component capable of delivering a to-be-processed workpiece 200 to the opening 11 and/or delivering a processed workpiece 200 out of the opening 11. When one end of the cavity 10 is provided with the opening 11, the material delivery mechanism 40 not only feeds the workpiece 200 but also discharges the workpiece 200. When two opposite ends of the cavity 10 are both provided with the opening 11, the material delivery mechanism 40 on one side delivers the workpiece 200 toward one opening 11, and the material delivery mechanism 40 on the other side delivers the workpiece 200 out of the other opening 11. The material delivery mechanism 40 may have various designs. For example, the material delivery mechanism 40 may be designed as a belt conveying device, a roller conveying device, a guide rail conveying device, a chain conveying device, or the like.

In addition, while delivering the workpiece 200, the material delivery mechanism 40 can directly carry the workpiece 200 for delivery or carry a tray 210 on which the workpiece 200 is loaded for delivery.

For ease of understanding of an operation procedure between the plurality of cavities 10, two cavities 10 are used as an example for description (that is, a first cavity 1a and a second cavity 1b). In addition, the features appearing in the foregoing embodiments are also used for describing the operation procedure between the cavities 10. An initiation procedure between the cavities 10 is as follows: The end cover 21 at a feeding position of the first cavity 1a is in an opened state, and the end cover 21 at a discharging position of the first cavity 1a is in a closed state; the material delivery mechanism 40 delivers, to the opening 11 of the first cavity 1a (for example, a guide rail feeding position in the first cavity 1a), the first tray 210 of a group A (group A may include seven trays 210) on which the workpieces 200 are loaded; and a feeding sensor senses the tray 210, the first driver 31 drives the conveying member 34 provided with the limiting part 35 to move the tray 210 to the first stop position 15, and when the feeding sensor has not sensed the first tray 210, the first driver 31 stops working.

The foregoing steps are repeated six times. After six times, the tray 210 (the first tray 210) entering the first cavity 1a first has reached the seventh stop position 15, one end of the tray 210 overlaps with one end of the seventh stop position 15, a discharging sensor senses the tray 210, and then the system automatically stops the feeding cycle. After the feeding sensor senses no tray 210, the second driver 22 moves to close the end cover 21 at the feeding position. The third driver 232 operates to drive the lock ring 231 to rotate, and after the locking structure 23 rotates to perform in-place locking, the first cavity 1a is kept sealed from the outside via the end cover 21. The foregoing actions are synchronously implemented in the second cavity 1b, and at this moment, the state of the second cavity 1b is the same as that of the first cavity 1a (the first group of trays 210 in the first cavity 1a is named as the group A, and the second group of trays 210 is named as a group B). The pressurization valve 13 of the first cavity 1a is opened so that the first cavity 1a communicates with an air source, pressure in the first cavity 1a increases, and when the pressure in the first cavity 1a reaches a set value (a target pressure may be set according to a technological requirement), the pressurization valve 13 is closed, and timing for high-pressure standing is synchronously started. Optionally, after pressurization is completed, when the pressure in the first cavity 1a is lower than the set pressure, the pressurization valve 13 is opened; and after the pressure in the first cavity 1a reaches the set value, the pressurization valve 13 is closed, such that the pressure in the cavity is approximately maintained at the set pressure all the time. After a high-pressure standing time in the first cavity 1a has elapsed (the standing duration may be set according to a technological duration), the pressurization valve 13 is closed (the state of the pressurization valve 13 is determined first, the pressurization valve 13 needs to be closed if it is in an opened state and, and no operation is performed if the pressurization valve 13 is in a closed state), the control valve 12 is opened to monitor pressure changes in the two cavities 10, and the control valve 12 is closed after the air pressures in the two cavities 10 are balanced.

After the initiation procedure is completed, the pressure relief valve 14 of the first cavity 1a is opened, and the pressurization valve 13 of the second cavity 1b is opened. When a pressure value read on a pressure gauge of the first cavity 1a is equal to an external pressure, the pressure relief valve 14 is closed. After the pressure of the second cavity 1b reaches a set value (a target pressure may be set according to a technological requirement), the pressurization valve 13 is closed, and timing for high-pressure standing in the second cavity 1b is started. After the pressure relief valve 14 of the first cavity 1a is closed, the third driver 232 of the first cavity 1a retracts back, and the locking structure 23 for the end cover 21 rotates reversely. After the locking structure 23 rotates in place, the end cover 21 and the cavity 10 are unfixed, and the second driver 22 moves to open the end cover 21.

After it has been sensed that the end cover 21 is opened in place and that no tray 210 is present at the discharging position, the first driver 31 works to discharge the first tray 210 of the group A out of the first cavity 1a and feed the first tray 210 of the group B at the feeding position into the opening 11 of the first cavity 1a; and the first tray 210 of the group B is conveyed to the first stop position 15. When the discharging sensor senses the second tray 210 of the group A, and a feeding reflector photoelectric sensor has not sensed the first tray 210 of the group B, the first driver 31 stops working. At this moment, the second tray 210 of the group A is located at the seventh stop position 15, and the first tray 210 of the group B is located at the first stop position 15. The foregoing steps are repeated such that a near end of the seventh tray 210 of the group A has left the seventh stop position 15, one end of the first tray 210 of the group B overlaps with one end of the seventh stop position 15, and the system automatically stops the feeding and discharging cycle.

According to the foregoing control steps, when a feeding and discharging step is implemented in the first cavity 1a, a standing operation under pressure is implemented in the second cavity 1b. Alternatively, when a standing operation under pressure is implemented in the first cavity 1a, a feeding and discharging step is implemented in the second cavity 1b. In this way, when the first cavity 1a needs to be pressurized, the second cavity 1b is in a pressure relief state; alternatively, when the first cavity 1a releases pressure, the second cavity 1b is in a pressurized state.

In this way, use of the material delivery mechanism 40 allows more convenient material feeding and discharging in the cavity 10 and improves the operation efficiency.

According to some embodiments of this application, referring to FIG. 1, the material delivery mechanism 40 includes a base 41 and a transfer holder 42, where one end of the base 41 extends to the opening 11; and the transfer holder 42 is slidably disposed on the base 41 and configured to carry the workpiece 200.

The transfer holder 42 refers to a structure capable of carrying the workpiece 200 and capable of transferring the workpiece 200 to or away from the opening 11. The transfer holder 42 slides on the base 41 in an automatic control manner or in a manual pushing manner. For example, the base 41 is provided with a device such as a pneumatic cylinder, an electric cylinder, or a hydraulic cylinder to drive the transfer holder 42 to move. The base 41 may be designed as a guide rail structure.

To provide convenience for the workpiece 200 or the tray 210 carrying the workpiece 200 to be smoothly taken off the transfer holder 42, the transfer holder 42 may be provided with a roller shaft 421. The workpiece 200 or the tray 210 carrying the workpiece 200 is placed on the roller shaft 421 such that the workpiece 200 or the tray 210 can be taken off the transfer holder 42 more easily.

With cooperation of the transfer holder 42 and the base 41, the workpiece 200 is transferred more conveniently, improving material feeding and discharging efficiency in the cavity 10.

According to some embodiments of this application, referring to FIG. 1, all of the cavities 10 are spaced apart side by side, and two opposite ends of each of the cavities 10 in the preset direction X are both provided with the opening 11, where the preset direction X is the horizontal direction.

The two opposite ends of the cavity 10 are both provided with the opening 11, indicating that one of the openings 11 can serve as a material feeding port and the other one of the openings 11 can serve as a material discharging port during operation. Thus, material feeding and discharging can be implemented synchronously, significantly improving the operation efficiency. It is appreciated that, for ease of material feeding and discharging, the cavity 10 can be laid flat. In other words, the pressure vessel apparatus 100 is a horizontally-arranged device.

The cavities 10 are arranged side by side and spaced apart. Such a side-by-side arrangement saves space between the cavities 10, and thus use in space-limited situations is facilitated. It should be noted that the cavities 10 being arranged side by side should be construed as that: the cavities 10 are arranged side by side in a direction perpendicular to the preset directions X in a manner of being approximately parallel to each other in their respective preset directions X. In addition, the side-by-side arrangement of the cavities 10 is not limited to top-to-bottom side-by-side arrangement shown in FIG. 1, may be left-to-right side-by-side arrangement on the same horizontal plane, or may be oblique top-to-bottom side-by-side arrangement on different horizontal planes. None of these side-by-side arrangement manners in different directions affects implementation of the solutions of this application.

Such a proper position arrangement of the cavity 10 and the opening 11 allows synchronous implementation of material feeding and discharging in the cavity 10 and improves the operation efficiency. In addition, space is saved, and use in space-limited situations is facilitated.

The inventor has further noted that pressure vessels have undesirable utilization during standing operation under pressure of traditional vessels. For example, a standing process under pressure of a battery is used as an example. During the operation, the cavity 10 needs to be lifted to separate the cavity 10 from the end cover 21, so as to open the pressure vessel apparatus 100. Subsequently, a transfer tool is used to put workpieces 200 via the end cover 21 in a stacking manner. After the workpieces 200 are placed, the cavity 10 is lowered such that the cavity 10 encloses the end cover 21. However, in such a pressure vessel, the cavity 10 thereof is only for enclosing the cover, and space above the workpieces 200 in the cavity 10 cannot be used. In addition, the transfer of the workpieces 200 is complicated and cannot follow a quick production tempo of batteries.

In view of this, to effectively solve the traditional-pressure-vessel problems that pressure vessels have undesirable utilization, battery transfer is complicated, and the like, the inventor has designed a pressure vessel apparatus 100 through in-depth research: two openings 11 of a cavity 10 are both provided with an openable end cover mechanism 20; and a conveying mechanism 30 is also arranged in the cavity 10. Therefore, during operation, the conveying mechanism 30 can be used to feed a to-be-processed workpiece 200 via one opening 11 and discharge a processed workpiece 200 via the other opening 11, such that material feeding and discharging in the cavity 10 can be synchronously implemented, helping to improve efficiency of standing operation under pressure. In addition, the workpiece 200 fed can be transferred in the cavity 10 under the action of the conveying mechanism 30, such that different workpieces 200 can be orderly distributed to different positions in the cavity 10, making full use of the internal space of the cavity 10 and improving utilization of the cavity 10. In this way, with the conveying mechanism 30 provided in the cavity 10 in this application, the production tempo of batteries can be effectively met.

According to some embodiments of this application, referring to FIG. 1, this application provides a pressure vessel apparatus 100. The pressure vessel apparatus 100 includes a cavity 10, an end cover mechanism 20, and a conveying mechanism 30. Two opposite ends of the cavity 10 in a preset direction X are both provided with an opening 11, and the cavity 10 is configured to hold a workpiece 200 inside. The end cover mechanism 20 is configured to control the opening 11 to open or close, and the conveying mechanism 30 is at least partially located in the cavity 10 and configured to drive the workpiece 200 to be fed via one opening 11 and discharged via the other opening 11.

The cavity 10 refers to a vessel structure with some internal space for holding the workpiece 200 inside. Since the workpiece 200 requires a standing operation under pressure in the cavity 10, the cavity 10 should be designed with sufficient air tightness and pressure resistance. A structural design of the cavity 10 in this embodiment may refer to that of the cavity 10 in any one of the foregoing solutions. For example, the cavity 10 may be provided in plurality, a control valve 12 may be provided between at least two of the cavities 10, and at least one of the cavities 10 may be provided with components such as a pressure relief valve 14 and a pressurization valve 13. All features of the cavity 10 in the foregoing solutions can be incorporated by reference in the cavity 10 in this solution. For this, details are not repeated in this application.

The end cover mechanism 20 refers to a component capable of closing or opening the opening 11. When the end cover mechanism 20 closes the opening 11, the inside of the cavity 10 is in a closed state. In this case, the cavity 10 can be internally pressurized, such that a standing operation under pressure can be performed on the workpiece 200. The end cover mechanism 20 may be the end cover mechanism 20 in any one of the foregoing solutions. For example, the end cover mechanism 20 includes an end cover 21, a second driver 22, a locking structure 23, and the like. Any one of the foregoing structural features of the end cover mechanism 20 can be incorporated by reference in the end cover mechanism 20 in this solution. For this, details are not repeated in this application either.

The conveying mechanism 30 refers to a component capable of conveying and transferring the workpiece 200. When the conveying mechanism 30 is located in the cavity 10, the conveying mechanism 30 can convey a to-be-processed workpiece 200 into the cavity 10 via the opening 11 or convey a processed workpiece 200 out of the opening 11. Similarly, the conveying mechanism 30 may be the conveying mechanism 30 in any one of the foregoing solutions. For example, the conveying mechanism 30 includes a first driver 31, a driving member 32, a driven member 33, a conveying member 34, and the like. Any one of the foregoing structural features of the conveying mechanism 30 can be incorporated by reference in the conveying mechanism 30 in this solution. For this, details are not repeated in this application.

In this way, with the conveying mechanism 30 provided in the cavity 10 in this application, the production tempo of batteries can be effectively met.

According to some embodiments of this application, this application provides a battery manufacturing system including the foregoing pressure vessel apparatus 100.

According to some embodiments of this application, referring to FIG. 1 to FIG. 6, this application provides a pressure vessel apparatus 100. The pressure vessel apparatus 100 includes a plurality of cavities 10 arranged in parallel; a control valve 12 is connected between at least two of the cavities 10; and the air valve between the cavities 10 is controlled to open and close to implement communication and non-communication between the cavities 10. In addition, the conveying mechanism 30 using a motor and a chain for transmission is used in the cavity 10 to transfer a battery in the cavity 10.

The technical features in the foregoing embodiments may be combined in any manner. For brevity of description, not all possible combinations of the technical features in the foregoing embodiments are described. However, as long as there is no contradiction among combinations of these technical features, all the combinations should be considered within a range recorded in this specification.

The foregoing embodiments show merely several implementations of this application, and descriptions thereof are specific and detailed, but should not be construed as any limitation on the scope of this patent. It should be noted that persons of ordinary skill in the art may further make several modifications and improvements without departing from the concept of this application, and all these modifications and improvements fall within the protection scope of this application. Therefore, the protection scope of this application should be subject to the appended claims.

## Claims

1. A pressure vessel apparatus (100), comprising:
a plurality of cavities (10), each of the cavities (10) being configured to hold a workpiece (200) inside; and
a control valve (12) connected between at least two of the cavities (10) to control internal communication and non-communication between the cavities (10) connected to the control valve (12).

2. The pressure vessel apparatus (100) according to claim 1, wherein the pressure vessel apparatus (100) further comprises a pressurization valve (13); at least one of the cavities (10) communicates with the pressurization valve (13); and the pressurization valve (13) is configured to communicate with an air source.

3. The pressure vessel apparatus (100) according to claim 1 or 2, wherein the pressure vessel apparatus (100) further comprises a pressure relief valve (14); at least one of the cavities (10) communicates with the pressure relief valve (14); and the pressure relief valve (14) is configured to communicate with the outside.

4. The pressure vessel apparatus (100) according to any one of claims 1 to 3, wherein the pressure vessel apparatus (100) further comprises an end cover mechanism (20); at least one end of each of the cavities (10) in a preset direction (X) is provided with an opening (11); and the end cover mechanism (20) is configured to control the opening (11) to open or close.

5. The pressure vessel apparatus (100) according to claim 4, wherein the pressure vessel apparatus (100) further comprises a conveying mechanism (30), the conveying mechanism (30) being at least partially located in at least one of the cavities (10) and configured to drive the workpiece (200) to be fed or discharged via the opening (11).

6. The pressure vessel apparatus (100) according to claim 5, wherein the conveying mechanism (30) is provided with a limiting part (35), the limiting part (35) being configured to limit the workpiece (200) in the preset direction (X).

7. The pressure vessel apparatus (100) according to claim 5, wherein the conveying mechanism (30) comprises a first driver (31), a driving member (32), a driven member (33), and a conveying member (34), wherein the driving member (32) and the driven member (33) are spaced apart along the preset direction (X); the conveying member (34) loops around the driving member (32) and the driven member (33); and the first driver (31) is configured to drive the driving member (32) to rotate.

8. The pressure vessel apparatus (100) according to any one of claims 4 to 7, wherein the end cover mechanism (20) comprises:
an end cover (21);
a second driver (22) in driving connection with the end cover (21) and configured to drive the end cover (21) to close the opening (11) or move away from the opening (11); and
a locking structure (23), wherein when the end cover (21) closes the opening (11), the locking structure (23) is configured to lock or unlock the end cover (21) and the cavity (10).

9. The pressure vessel apparatus (100) according to claim 8, wherein the locking structure (23) comprises a third driver (232), a lock ring (231), a first protrusion (233) provided on an inner wall of the lock ring (231), and a second protrusion (234) provided on the end cover (21), wherein the lock ring (231) sleeves the periphery of the opening (11); when the end cover (21) closes the opening (11), the second protrusion (234) is located on one side of the first protrusion (233) facing toward the cavity (10); and the third driver (232) is configured to drive the lock ring (231) or the end cover (21) to rotate about an axis thereof, so that the first protrusion (233) and the second protrusion (234) are misaligned or face toward each other in the preset direction (X).

10. The pressure vessel apparatus (100) according to any one of claims 4 to 9, wherein the pressure vessel apparatus (100) further comprises a material delivery mechanism (40); one side of each opening (11) is correspondingly provided with the material delivery mechanism (40); and the material delivery mechanism (40) is configured to deliver a to-be-processed workpiece (200) to the opening (11) or deliver a processed workpiece (200) out of the opening (11).

11. The pressure vessel apparatus (100) according to claim 10, wherein the material delivery mechanism (40) comprises a base (41) and a transfer holder (42), one end of the base (41) extending to the opening (11), and the transfer holder (42) being slidably disposed on the base (41) and configured to carry the workpiece (200).

12. The pressure vessel apparatus (100) according to any one of claims 4 to 11, wherein all of the cavities (10) are spaced apart side by side, and two opposite ends of each of the cavities (10) in the preset direction (X) are both provided with the opening (11), wherein the preset direction (X) is the horizontal direction.

13. A battery manufacturing system, comprising the pressure vessel apparatus (100) according to any one of claims 1 to 12.
